# EUROPÄISCHE PATENTANMELDUNG

(11) **EP 0 725 298 A1**
(43) Veröffentlichungstag der Anmeldung: **07.08.1996**
(21) Anmeldenummer: 96100976.8
(22) Anmeldetag: 24.01.1996
(51) Int. Cl.: G02C 13/00

(54) **Reinigungsgerät**

(30) Priorität: 03.02.1995 DE 19503586
(71) Anmelder: Papenmeier, Friedrich Horst, D-58239 Schwerte (DE)
(72) Erfinder: Papenmeier, Friedrich Horst, D-58239 Schwerte (DE)
(74) Vertreter: Marx, Lothar, Dr.

(57) **Zusammenfassung**

Die Erfindung betrifft ein Reinigungsgerät für die Gläser einer Brille mit einem Behälter für eine Reinigungsflüssigkeit, einem darauf angeordneten Wischarmpaar, wobei an zwei gegenüberliegenden Seiten des Behälters je ein Wischarm schwenkbar angebracht ist, je einem auswechselbaren Reinigungselement an dem freien Ende eines jeden Wischarmes, und einem Dochtsystem zur Förderung der Reinigungsflüssigkeit vom Behälter zu den Reinigungselementen, die in der Ruhestellung diesem gegenüberliegen.

## Beschreibung

Die Erfindung betrifft ein Reinigungsgerät für Brillengläser der im Oberbegriff des Anspruchs 1 angegebenen Gattung.

Um die klare Sicht durch die Gläser einer Brille für ihren Träger zu gewährleisten, müssen die Gläser täglich mehrmals gereinigt werden. Dies erfolgte bisher vielfach durch Aufbringen eines Feuchtigkeitsfilmes, so z.B. durch Anhauchen der Gläser oder durch Besprühen der Gläser mit einem Reinigungsmittel, die dann mit weichen Läppchen aus Papier, Textil, Kunst- oder Wildleder manuell sauber gewischt werden. Auch sind mit einem Reinigungsmittel getränkte, spezielle Brillenputztücher bekannt, die in einem Frischhaltetütchen stecken.

Die Anwendung dieser Mittel ist unhandlich und führt ferner zu unnötigem Abfall. Für die optimale Reinigung von Brillengläsern ist auch das Mitführen bzw. Bereithalten eines separaten Reinigungsmittels unpraktisch.

Um diesem abzuhelfen, sind gemäß dem Stand der Technik eine Reihe von weiteren Brillen-Reinigungs-Hilfen bzw. -Geräten vorgeschlagen und bekannt geworden, die aber allesamt bis heute nicht auf den Markt kamen, weil auch sie noch zu unpraktisch sind.
(DE-GM 80 27 469.7, DE-GM 84 14 867.5, DE-GM 89 03 613.1, DE-GM 91 13 060.3, DE-GM 92 09 121.0, DE-A 1 008 887, DE 34 12 558 A1, DE 37 16 740 A1, DE 42 07 478 A1, US-PS 4,546,517, US-PS 4,347,010)
Ein weiteres bekanntes Brillenreinigungsgerät (US-PS 43 47 010) weist ein rohrförmiges Gehäuse auf, in dem ein U-förmiges, starres Wischarmpaar angeordnet ist, das an seinen Enden mit scheibenförmigen, sich gegenüberstehenden Reinigungselementen bestückt ist. Unterhalb der U-Brücke des Wischarmpaares ist ein kleiner Flüssigkeitsballon angeordnet, der über ein Kanalsystem in der U-Brücke und den Wischarmen mit den Reinigungselementen in Verbindung steht. Das Gerät ist mittels einer separaten Kappe zu schließen.

Soll dieses Gerät in Arbeitsposition gebracht werden, so ist zunächst die Kappe abzunehmen und das Wischarmpaar aus dem rohrförmigen Gehäuse soweit herauszuziehen, bis der Flüssigballon zwischen zwei, in der Gehäusewand einander gegenüberliegenden Membranen steht, die bei Fingerdruck auf den Flüssigkeitsballon einwirken, wodurch die Reinigungsflüssigkeit zu den Reinigungselementen gedrückt wird, so daß die beidseitige Brillenglasreinigung durch Wischbewegungen erfolgen kann.

Dieses Gerät weist jedoch einige Nachteile auf.

So muß der Transport der Reinigungsflüssigkeit zu den Reinigungselementen über Kanäle durch ein Ballon-Drucksystem bzw. Ballon-Pumpsystem erfolgen.

Desweiteren ist der relativ kleine Flüssigkeitsballon oft nachzufüllen.

Bei abnehmendem Füllgrad muß das Gerät auf den Kopf gestellt werden, wenn die Reinigungsflüssigkeit durch Druck auf den Flüssigkeitsballon noch an die Reinigungselemente gelangen soll.

Nachteilig ist auch, daß die Durchmesser und somit die aktive Fläche der Reinigungselemente wegen des ovalen Gehäusequerschnittes klein gehalten werden müssen, wenn das Gerät auch in Hosen- oder Jackentaschen mitgeführt werden soll.

Wegen der feinen Kanäle in den Wischarmen ist die Herstellung des Gerätes schwierig und daher kostspielig. Die lose und damit verlierbare Kappe ist unpraktisch.

Auch dieser Gerätevorschlag hat deshalb bisher nicht zu einem marktreifen Produkt geführt.

Der Erfindung liegt daher die Aufgabe zugrunde, ein Gerät zu schaffen, bei dem die oben erwähnten Nachteile nicht auftreten.

Insbesondere soll das Gerät einfach aufgebaut, sowie für junge und ältere Nutzer leicht handhabbar sein.

Dies wird durch die im kennzeichnenden Teil des Anspruchs 1 angegebenen Merkmale erreicht.

Zweckmäßige Ausführungsformen werden durch die Merkmale der Unteransprüche definiert.

Die Erfindung wird im folgenden anhand eines Ausführungsbeispieles unter Bezugnahme auf die beigefügte, schematische Zeichnung näher erläutert. Es zeigen:
- Fig. 1: die Vorderansicht einer Ausführungsform des Reinigungsgerätes, und
- Fig. 2: die Seitenansicht des Reinigungsgerätes nach Fig. 1 mit teilabgeschwenktem Wischarm.

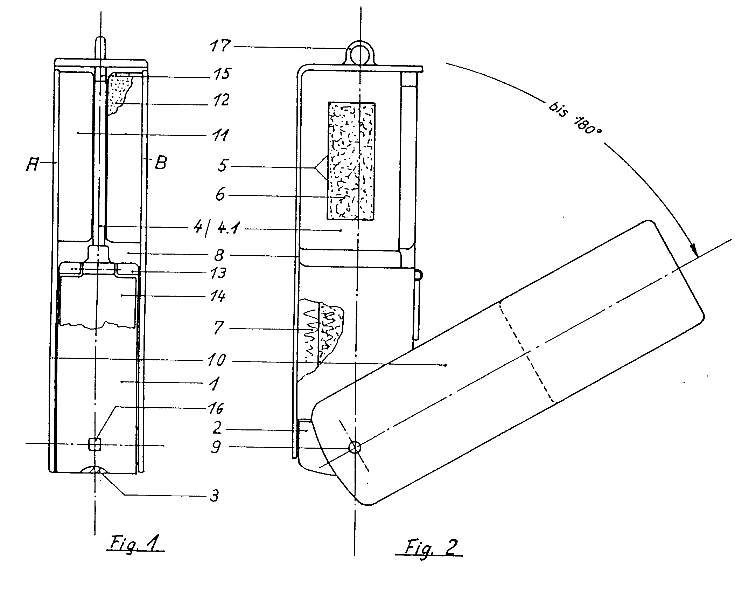

Das in Fig. 1 und 2 dargestellte Reinigungsgerät für Brillengläser weist einen Behälter 1 für eine Reinigungsflüssigkeit 7 mit einem eingesetzten Boden 2 und einer darin angeordneten, unverlierbaren Einfüllschraube 3 auf. Über dem Flüssigkeitsbehälter 1 ist in der Mitte eine Dochtführung 4 mit beidseitigen Fenstern 5 angeordnet, hinter denen sich ein Flachdocht 6 befindet, der in die Reinigungsflüssigkeit 7 im Flüssigkeitsbehälter 1 fast bis auf den Boden 2 reicht. Der Flüssigkeitsbehälter 1 und die Dochtführung 4 bilden mit einem Rückwandwinkel 8 eine Einheit.

Zu beiden Seiten des Flüssigkeitsbehälters 1 ist in einem Drehpunkt 9 je ein um bis zu 180 Grad schwenkbarer, leicht federnder Wischarm 10 angeordnet. Die Wischarme 10 können starr miteinander verbunden sein, sind aber in einer bevorzugten Ausführungsform unabhängig voneinander schwenkbar. An den Enden der Wischarme 10 sind gegenüberliegende etwa rechteckige Reinigungselemente 11 befestigt, die aus einem Schaumstoffkissen 12 und einem darübergezogenen, weichen, saugfähigen Hüllstoff auf der aktiven Reinigungsseite bestehen.

Die Reinigungselemente 11 sind auswechselbar, indem ihre Befestigung lösbar ausgestaltet wird, z.B. durch eine lösbare Rastverbindung, Kleben oder einen Klettverschluß.

In der Ruhestellung liegen die Reinigungselemente 11, die in einer bevorzugten Ausführungsform elastisch und rechteckig sind, mit ihren aktiven Reinigungsseiten unter leichtem Wischarm-Druck an den Seitenwänden der Dochtführung 4 an. Die Seitenwandstärke der Dochtführung 4 sorgt im Fenster 5 für einen definierten Abstand zwischen den Reinigungselementen 11 und dem Flachdocht 6, wodurch ein Übertritt von Reinigungsflüssigkeit 7, die über ein Dochtsystem 4.1 transportiert wird, in Ruhestellung nicht erfolgen kann.

Sollte letzteres gewünscht sein, so kann dies durch die Verringerung der Seitenwandstärke der Dochtführung 4 oder durch einen im Fenster 5 hervorstehenden Flachdocht 6 erreicht werden, um die Reinigungselemente 11 und den Flachdocht 6 miteinander in Kontakt zu bringen.

Die Reinigungselemente 11 sind durch die Wischarme 10 und den Rückwandwinkel 8 von drei Seiten und ihrer Stirnseite her geschützt. Durch eine in einem weiteren Drehpunkt 13 gelagerte Klappe 14, die in Geräte-Ruhestellung von einem ersten Haftmagneten 15 und in der Geräte-Arbeitsstellung von einem zweiten Haftmagneten 16 gehalten wird, kann auch die Vorderseite der Reinigungselemente 11 verschlossen werden.

Zum Reinigen einer Brille müssen als erstes die Reinigungselemente 11 mit der Reinigungsflüssigkeit 7 benetzt werden. Das kann quasi automatisch beim Ausschwenken der Wischarme 10 erfolgen, indem der dabei z.B. mit dem Daumen und Zeigefinger ausgeübte, leichte Druck auf die beiden Wischarme 10 in den Punkten A und B auch auf die Reinigungselemente 11 einwirkt, die so Kontakt durch die Fenster 5 über den Flachdocht 6 mit der Reinigungsflüssigkeit 7 bekommen. Als Alternative hierzu ist es, wie erwähnt, möglich, durch einen im Fenster 5 hervorstehenden Flachdocht und/oder durch Verringerung der Seitenwandstärke der Dochtführung 4 das Übertreten von Reinigungsflüssigkeit 7 auf die Reinigungselemente 11 in Ruhestellung zu erreichen.

Beim Ausschwenken der Wischarme 10 um bis zu 180 Winkelgrade in ihre gewünschte Arbeitsstellung wird ferner gleichzeitig die Klappe 14, die in Ruhestellung von dem ersten Haftmagneten 15 gehalten wird, durch die Reinigungselemente 11 zum Abfallen gebracht und dann von dem zweiten Haftmagneten 16 gehalten.

Die ausgeschwenkten Wischarme 10 werden in der Arbeitsstellung arretiert, z.B. mittels Nocken, so daß sich die Reinigungselemente 11 gegenüberstehen. Eine Schwenkbewegung aus der Arbeitsstellung heraus ist nur durch Aufbringen einer zusätzlichen Kraft möglich, die den form- und/oder kraftschlüssigen Arretierungs-Eingriff überwindet.

So präpariert, führt man das Reinigungsgerät mit den Reinigungselementen 11 über ein Brillenglas, das so gleichzeitig beidseitig gereinigt werden kann.

Nach längerem Gebrauch lassen sich die Reinigungselemente 11 leicht mit einem schmutz- bzw. fettlösenden Waschmittel reinigen. Damit man das Gerät stets zur Hand hat, kann man es auch umhängen; zu diesem Zweck ist eine Öse 17 für eine Halskette oder Schnur vorgesehen. Zum Mitführen in der Jackentasche kann dieses relativ flache Gerät auch mit einem an sich bekannten Taschenklips versehen werden.

Die Vorteile dieses Brillenreinigungsgerätes liegen einmal in seinem einfachen, robusten Aufbau und der leichten Herstellung, denn die Einheit bestehend aus Flüssigkeitsbehälter 1, Dochtführung 4 und Rückwandwinkel 8 kann z.B. sehr rationell als ein Thermoplast-Teil gefertigt werden.

Ein weiterer, wesentlicher Vorteil ist, daß das Zuführen der Reinigungsflüssigkeit 7 zu den Reinigungselementen 11 über das Dochtsystem 4.1 ohne mechanisch bewegte Teile völlig lageunabhängig quasi automatisch bis zum letzten Tropfen erfolgt.

Für den Anwender liegt ein weiterer Vorteil darin, daß das Reinigungsgerät aufgrund seiner geringen Größe (ca. 75 x 20 x 15 mm) leicht mitzuführen und auch gut mit einem Brillenetui zu kombinieren sowie einfach zu handhaben ist.

## Patentansprüche

1. Reinigungsgerät für die Gläser einer Brille
a) mit einem Flüssigkeitsbehälter (1) für eine Reinigungsflüssigkeit (7),
b) mit einem auf dem Flüssigkeitsbehälter (1) angeordneten Wischarmpaar (10),
c) mit je einem auswechselbaren Reinigungselement (11) an dem freien Ende eines jeden Wischarmes (10) und
d) mit einem System zur Förderung der Reinigungsflüssigkeit (7) zu den Reinigungselementen (11),
gekennzeichnet durch die folgenden Merkmale:
e) an zwei gegenüberliegenden Seiten des Flüssigkeitsbehälters (1) ist je ein schwenkbarer Wischarm (10) mit wenigstens je einem auswechselbaren Reinigungselement (11) an dem freien Ende des Wischarmes (10) angebracht;
f) der Transport der Reinigungsflüssigkeit (7) zu den Reinigungselementen (11) erfolgt über ein Dochtsystem (4.1), das mit dem Reinigungsbehälter (1) verbunden ist; und
g) in der Ruhestellung der Wischarme (10) liegen die aktiven Seiten der Reinigungselemente (11) den beiden Seitenwänden des Dochtsystems (4.1) gegenüber, von denen sie durch wenigstens je ein Fenster die Reinigungsflüssigkeit (7) beziehen können.

2. Reinigungsgerät nach Anspruch 1, dadurch gekennzeichnet, daß das Übertragen der Reinigungsflüssigkeit (7) von dem Dochtsystem (4.1) auf die Reinigungselemente (11) durch den beim Ausschwenken der Wischarme (10) erzeugten Fingerdruck auf die Wischarme (10) unterstützt wird, der die Reinigungselemente in Kontakt mit den Seitenwänden des Dochtsystems (4.1) bringt.

3. Reinigungsgerät nach Anspruch 1 oder 2, dadurch gekennzeichnet, daß die Reinigungsflüssigkeit (7) auch in der Ruhestellung der Wischarme (10) und ohne äußere Krafteinwirkung vom Dochtsystem (4.1) auf die Reinigungselemente (11) übertragen wird, die sich in Anlage an den Seitenwänden des Dochtsystems befinden.

4. Reinigungsgerät nach einem der vorhergehenden Ansprüche, dadurch gekennzeichnet, daß der Flüssigkeitsbehälter (1) und die Dochtführung (4) mit einem Rückwandwinkel (8) des Behälters (1) eine Einheit bilden.

5. Reinigungsgerät nach einem der vorhergehenden Ansprüche, dadurch gekennzeichnet, daß die offene Seite der Reinigungselemente (11) durch eine Klappe (14) verschließbar ist.

6. Reinigungsgerät nach Anspruch 5, dadurch gekennzeichnet, daß die Klappe (14) je nach Stellung der Wischarme (10) von Permanentmagneten (15,16) gehalten wird.

7. Reinigungsgerät nach einem der vorhergehenden Ansprüche, dadurch gekennzeichnet, daß die Reinigungselemente (11) etwa rechteckig sind.

8. Reinigungsgerät nach einem der vorhergehenden Ansprüche, dadurch gekennzeichnet, daß die beiden unabhängig voneinander schwenkbaren Wischarme (10) in wenigstens einer Arbeitsstellung durch form- und/oder kraftschlüssigen Eingriff, insbesondere durch Nocken, so arretierbar sind, so daß sich die Reinigungselemente (11) gegenüberstehen.

9. Reinigungsgerät nach einem der vorhergehenden Ansprüche, dadurch gekennzeichnet, daß der Flüssigkeitsbehälter (1) mit der Dochtführung (4) und der Rückwandwinkel (8) sowie die beiden Wischarme (10) aus thermoplastisch verformbarem Material, insbesondere einem Thermoplasten, hergestellt sind.

10. Reinigungsgerät nach einem der vorhergehenden Ansprüche, dadurch gekennzeichnet, daß es mit einem Taschenklipp versehen ist.

11. Reinigungsgerät nach einem der vorhergehenden Ansprüche, dadurch gekennzeichnet, daß es mit einem an sich bekannten Brillenetui kombiniert ist.

12. Reinigungsgerät nach einem der vorhergehenden Ansprüche, dadurch gekennzeichnet, daß ein eingesetzter Boden (2) des Flüssigkeitsbehälters (1) eine unverlierbare Einfüllschraube (3) aufweist.
